# EUROPÄISCHE PATENTANMELDUNG

(11) **EP 1 396 397 A2**
(43) Veröffentlichungstag der Anmeldung: **10.03.2004**
(21) Anmeldenummer: 03018647.2
(22) Anmeldetag: 20.08.2003
(51) Int. Cl.: B60R 21/26

(54) **Gasgenerator**

(30) Priorität: 03.09.2002 DE 20213555 U
(71) Anmelder: TRW Airbag Systems GmbH, 84544 Aschau am Inn (DE)
(72) Erfinder: Hofmann, Achim, Dr., 84570 Polling (DE); Bierwirth, Sebastian, Dr., 83562 Rechtmehring (DE); Schwuchow, Karsten, 83512 Wasserburg (DE)
(74) Vertreter: Kitzhofer, Thomas, Dipl.-Ing.

(57) **Zusammenfassung**

Ein Gasgenerator hat ein langgestrecktes Außengehäuse (10), das Stirnseiten und eine Seitenwand aufweist, wenigstens drei unabhängig voneinander aktivierbaren Stufen (12, 14, 16), und zu jeder Stufe (12, 14, 16) eine zugeordnete Zündereinheit (32, 34, 36). Die Zündereinheiten (32, 34, 36) sind an die Seitenwand des Außengehäuses (10) angesetzt.

## Beschreibung

Die Erfindung betrifft einen langgestreckten mehrstufigen Gasgenerator.

Solche mehrstufigen Gasgeneratoren sind angedacht und werden inzwischen eingesetzt, um die erzeugte Gasmenge den Erfordernissen eines Fahrzeuginsassen-Rückhaltesystems situationsbedingt anzupassen. Rohrgasgeneratoren haben ein Außengehäuse, dessen axiale Länge deutlich größer ist als der Durchmesser. Solche Rohrgasgeneratoren werden bislang zweistufig ausgeführt, wobei die Zünder in den axialen Stirnwänden des Außengehäuses sitzen.

Die Erfindung schafft einen mehr als zweistufigen, nämlich mindestens dreistufigen Gasgenerator, der sich durch einen einfachen Aufbau auszeichnet. Der erfindungsgemäße Gasgenerator hat ein langgestrecktes Außengehäuse, das Stirnseiten und eine Seitenwand aufweist, wenigstens drei unabhängig voneinander aktivierbare Stufen und zu jeder Stufe eine zugeordnete Zündereinheit, wobei die Zündereinheiten an die Seitenwand des Außengehäuses angesetzt sind. Diese Zündereinheiten sind also von außen seitlich an das Außengehäuse angesetzt und nicht, wie im Stand der Technik, axial an den Stirnwänden des Außengehäuses vorgesehen. Dies macht den erfindungsgemäßen Gasgenerator kompakter in seiner axialen Ausdehnung. Darüber hinaus erlaubt es eine gute Zugänglichkeit zu den Zündern, die nicht, wie im Stand der Technik, beim Zusammenbau und Schließen des Außengehäuses bereits eingebaut sein müssen. Vielmehr können sämtliche Zündereinheiten sehr spät an das Außengehäuse seitlich von außen angesetzt und daran befestigt werden. Schließlich ist auch die Zugänglichkeit zu den Zündern sehr gut, denn diese stehen seitlich ab, vorzugsweise alle in dieselbe Richtung, so daß die Zünderstecker nicht von unterschiedlichen Seiten an die Zünder angebracht werden müssen. Dies vereinfacht den Einbau im Fahrzeug, und zudem muss für die Montage der Zünderstecker weniger Raum zur Verfügung gestellt werden.

Vorzugsweise sind die Zündereinheiten radial zum Außengehäuse ausgerichtet, d. h. die Längsachse der Zündereinheiten steht senkrecht zu der Längsachse des Außengehäuses.

Bei der bevorzugten Ausführungsform sind zudem alle Zündereinheiten in Geometrie und Gestalt identisch, so daß sich ein modularer Aufbau zumindest bezüglich der Zündereinheiten bewerkstelligen lässt.

Ferner ragen bevorzugt sämtliche Zündereinheiten in dieselbe Richtung, d. h. ihre Längsachsen liegen in einer Ebene und auf einer Seite des Außengehäuses.

Das Außengehäuse kann für jede Zündereinheit eine Durchlassöffnung besitzen und zu jeder Stufe Auslassöffnungen für erzeugtes Gas. Die Durchlassöffnung und die Auslassöffnungen können in diametral gegenüberliegenden Bereichen des Außengehäuses angeordnet sein. Dies hat gerade bei einem rein pyrotechnischen Gasgenerator folgenden Vorteil. Auf der einen Seite, nämlich im Bereich der Durchlassöffnung, strömt das Anzündgas, welches in der Zündereinheit produziert wird, in das Außengehäuse ein und gelangt in die Brennkammer. Von dieser Seite aus wird der Festtreibstoff großflächig angezündet. Das bei der Verbrennung des Festtreibstoffs erzeugte Gas kann aus dem Außengehäuse im Bereich der gegenüberliegenden Seite austreten. Diese Konstruktion erlaubt einen gleichmäßigen Abbrand des Festtreibstoffs.

Die unterschiedlichen Stufen sind durch zugeordnete, mit Festtreibstoff gefüllte Brennkammern gebildet, wie es eine bevorzugte Ausführungsform vorsieht.

Darüber hinaus könnten die Stufen natürlich auch durch zugeordnete, mit Druckgas oder Flüssigtreibstoff gefüllte Kammern gebildet sein, denen jeweils eine eigene Zündereinheit zugeordnet ist.

Das Außengehäuse ist bevorzugt modular aufgebaut, indem die zwischen den axial äußeren Stufen liegende Stufe oder liegenden Stufen einen eigenen durch ein bzw. jeweils ein rohrförmiges Teil gebildeten Außengehäuseabschnitt besitzt bzw. besitzen. Durch diese konstruktive Ausgestaltung wird eine Art Baukastensystem gebildet. Man kann dadurch aus dem zur Verfügung stehenden Baukasten sehr einfach dreistufige oder mehr als dreistufige Gasgeneratoren erzeugen. Man nimmt hierzu jeweils eigene, topfförmige Außengehäuseendabschnitte, die jeweils eine Stufe bilden. Dazwischen setzt man eine oder mehrere vorgefertigte Außengehäuseabschnitte, die gleiche Anschlußgeometrien besitzen.

Zwischen den Außengehäuseabschnitten sind scheibenförmige axiale Trennwände vorgesehen, die alle vorzugsweise dieselbe Geometrie und Abmaße besitzen.

Wenn der erfindungsgemäße Gasgenerator drei Stufen hat, sind die Gaserzeugungsleistungen dieser Stufen vorzugsweise etwa 1/7, 2/7 und 4/7 der Gesamtgaserzeugungsleistung des Gasgenerators. Hierdurch lassen sich bereits sehr feine Abstufungen erreichen.

Noch feiner abgestuft ist ein Gasgenerator mit vier Stufen, dessen Gaserzeugungsleistungen etwa 7 %, 13 %, 27 % und 53 % der Gesamtgaserzeugungsleistung des Gasgenerators betragen.

Durch die so abgestuften drei- bzw. vier-stufigen Gasgeneratoren ist ein stufenlos einstellbarer Gasgenerator, wie er teilweise angedacht ist, fast überflüssig, denn je nach dem, welche Stufe oder Stufen gezündet werden und ggf. je nach dem, in welchen zeitlichen Abständen diese Stufen gezündet werden, ergeben sich Gasauströmverläufe, die sich geringfügig voneinander unterscheiden.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
Fig. 1 eine Längsschnittansicht durch einen erfindungsgemäßen drei-stufigen Gasgenerator,
Fig. 2 eine Längsschnittansicht durch einen erfindungsgemäßen vier-stufigen Gasgenerator,
Fig. 3 eine Tabelle, die die unterschiedlichen Gaserzeugungsleistungen der beiden dargestellten Gasgeneratoren angibt, und
Fig 4 ein Diagramm, das den Kannendruckverlauf beim Gasgenerator nach Fig. 1 abhängig von den gezündeten Stufen zeigt.

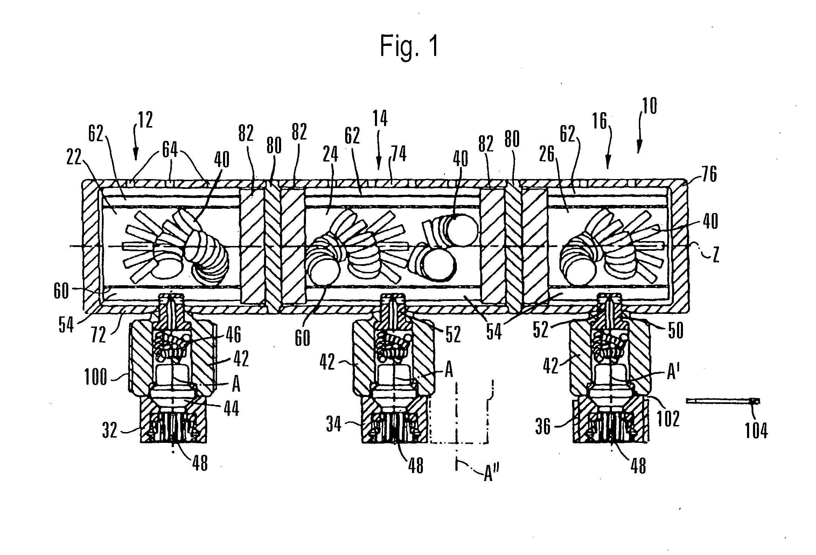

In Fig. 1 ist ein drei-stufiger Gasgenerator mit einem langgestreckten rohrförmigen, zylindrischen Außengehäuse 10 dargestellt.

Die Stufen sind mit 12, 14 und 16 bezeichnet und sind durch eigene, separate Brennkammern 22, 24, 26 und zugeordnete Zündereinheiten 32, 34, 36 gekennzeichnet. In jeder Brennkammer 22, 24, 26 ist eine Menge Festtreibstoff 40 enthalten, die durch die zugeordnete Zündereinheit 32, 34, 36 entzündet werden kann.

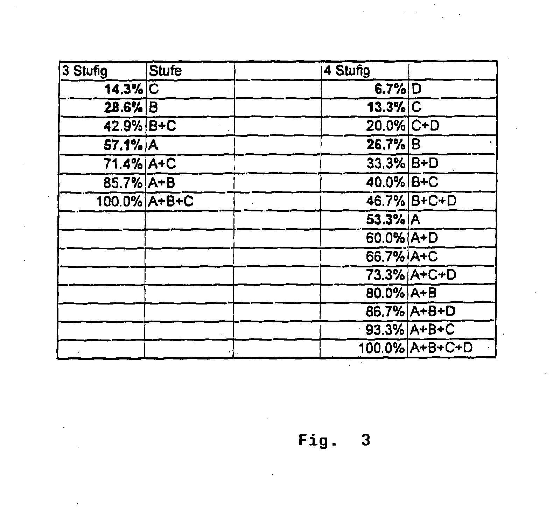

Die einzelnen Stufen 12, 14, 16 haben eine unterschiedliche Gaserzeugungsleistung, die unmittelbar von der Menge des in der zugeordneten Brennkammer 22, 24, 26 enthaltenen Festtreibstoffs abhängt. In Fig. 3 ist auf der linken Hälfte die Gaserzeugungsleistung jeder Stufe dargestellt. Die Brennkammer 26 enthält etwa 1/7, die Brennkammer 22 etwa 2/7 und die Brennkammer 24 etwa 4/7 der gesamten Menge an Festtreibstoff.

Sämtliche Zündereinheiten 32, 34, 36 sind identisch aufgebaut, haben gleiche Geometrie und gleiche Abmaße. Sie haben ferner ein langgestrecktes Zünderaußengehäuse 42 mit einer Mittelachse A, die rechtwinkelig die Mittelachse Z des Außengehäuses 10 schneidet. Die Zündereinheiten 32, 34, 36 stehen also radial zum Außengehäuse 10 und sind seitlich außen an es angesetzt, d.h. an ihr befestigt. In jedem Zünderaußengehäuse 42 sind ein Zünder 44 und eine Verstärkerladung 46 untergebracht. Rückseitig vom Zünder 44 sind elektrische Kontakte 48 vorgesehen, an die ein nicht gezeigter Zünderstecker anzuschließen ist. Diese Kontakte 48 sind aufgrund der Anordnung der Zündereinheiten 32, 34, 36 dem Außengehäuse 10 abgewandt. Wie Fig. 1 auch zu entnehmen ist, liegen sämtliche Zündereinheiten 32, 34, 36 bezüglich ihrer Achsen A in einer Ebene und liegen auf derselben Seite des Außengehäuses 10.

Die Zündereinheiten 32, 34, 36 haben jeweils auf der dem Außengehäuse 10 zugewandten Seite einen düsenförmigen Einsatz 50, der durch eine Durchlassöffnung 52 im Außengehäuse 10 in eine Verteilerkammer 54 ragt. Die Verteilerkammer 54 ist ein sich über die gesamte Länge der zugeordneten Brennkammer 22, 24, 26 erstreckende, langgestreckte, eine geringe Breite und Höhe aufweisende Kammer. Sie ist durch eine Einbuchtung eines zylindrischen, aus einem Lochblech bestehenden Einsatzes 60 gebildet, der die Brennkammerwand definiert und der bis auf zwei Einbuchtungen an der Innenseite des Außengehäuses 10 anliegt. Die erste Einbuchtung dieses Einsatzes bildet die Verteilerkammer 54. Die zweite Einbuchtung, die der ersten Einbuchtung diametral gegenüberliegt, bildet einen Expansionsraum 62, in dessen Bereich Ausströmöffnungen 64 im Außengehäuse 10 vorgesehen sind. Die Ausströmöffnungen 64 sind damit in einem Bereich angeordnet, der diametral der zugeordneten Durchlassöffnung 52 gegenüberliegt.

Der modulare Aufbau des Gasgenerators ergibt sich unter anderem auch aus der Unterteilung des Außengehäuses 10. Jede Stufe hat nämlich einen eigenen, durch ein separates Teil gebildeten Abschnitt des Außengehäuses. Die beiden axial äußeren Stufen 22 und 26 besitzen zur abschnittsweisen Bildung des Außengehäuses 10 zylindrische, an der äußeren Stirnseite geschlossene Rohre 72, 76. Die mittlere Stufe 24 besitzt ein axial beidseitig offenes Rohr 74, das über zwei identische scheibenförmige Trennwände 80 an die Rohre 72, 76 angekoppelt wird.

Sogenannte Füllkörper 82 schließen die Brennkammern 22, 24, 26 zu benachbarten Stufen.

Jede einzelne Stufe stellt eine geschlossene, vormontierbare Einheit dar.

Nach dem Befüllen jeder Brennkammer 22, 24, 26 mit der geforderten Menge Festtreibstoff 40 wird die Brennkammer mittels des Füllkörpers 82 geschlossen und kann so gelagert werden.

Es werden so zahlreiche unterschiedliche Stufen hergestellt, die dann wahlweise miteinander kombiniert werden.

Der fertig montierte Gasgenerator wird dann ins Fahrzeug eingebaut. Da die rückseitigen Kontakte 48 immer auf dieselbe Seite weisen, ist der Gasgenerator sehr schnell und einfach mit den Zündersteckem bestückbar.

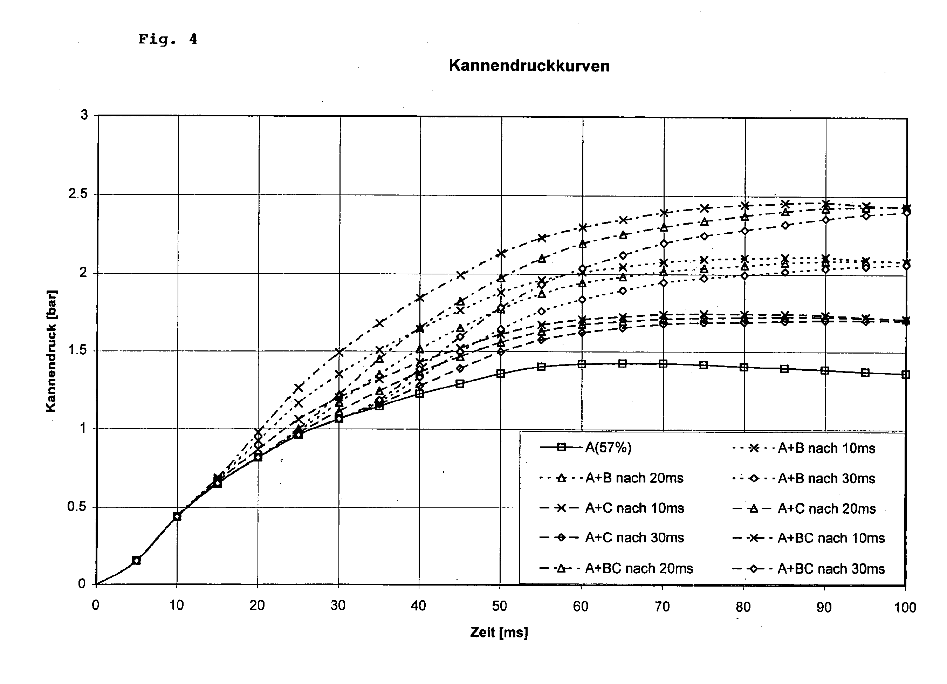

Im Rückhaltefall wird von Sensoren z.B. abhängig von der Position des Insassen, der Masse des Insassen, der Schwere des Unfalls oder vom Verlauf des Unfalls unter Zwischenschaltung einer Steuereinheit ermittelt, ob alle Stufen 22, 24, 26 ausgelöst werden müssen, und ggf., wann welche Stufe aktiviert werden soll. Abhängig davon lassen sich völlig unterschiedliche sogenannte Kannendruckverläufe erzielen, wie es exemplarisch in Fig. 4 für den Fall angedeutet ist, daß eine oder mehrere Stufen des Gasgenerators nach Fig. 1 gezündet werden. In Fig. 3 ist auch zu sehen, welche Gasmenge im Verhältnis zur gesamten erzeugten Gasmenge bei Zündung einer oder mehrerer Stufen produziert werden kann. Es ist hier sehr gut ersichtlich, daß sehr feine Abstufungen erzielbar sind.

Zu den in Fig. 4 gezeigten Kannendruckkurven lassen sich noch zahlreiche andere Kurven mit dem in Fig. 1 gezeigten Gasgenerator erzeugen lassen, indem beispielsweise die Stufen B und C einzeln gezündet werden oder die Stufen B oder C zuerst gezündet werden, wenn wahlweise die andere oder auch teilweise zusätzlich die Stufe A gezündet wird. Die Stufen A, B, C entsprechen im übrigen den Stufen 24, 22 und 26.

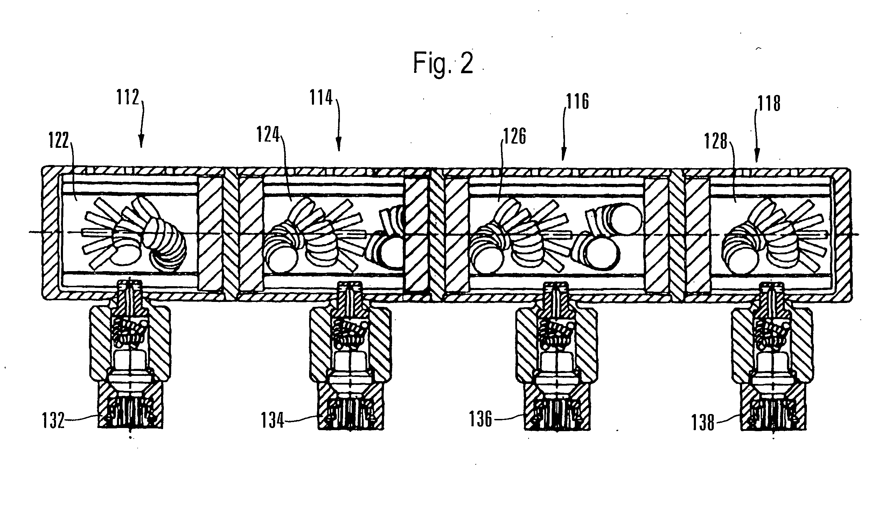

Die in Fig. 2 gezeigte Ausführungsform eines vierstufigen Gasgenerators entspricht im wesentlichen der in Fig. 1 dargestellten bezüglich des modularen Aufbaus. Bereits im Zusammenhang mit Fig. 1 eingeführte, entsprechende Teile haben ein um 100 erhöhtes Bezugszeichen. Jede Stufe 112, 114, 116 und 118 hat eine unterschiedliche Gaserzeugungsleistung, wie auch in Fig. auf der rechten Hälfte dargestellt ist. Die Stufe 116 entspricht der Stufe A in Fig. 3 und besitzt 53 % der Gesamtgaserzeugungsleistung des Gasgenerators, die Stufe 114 entspricht der Stufe B in Fig. 3 und besitzt etwa 27 % der Gesamtgaserzeugungsleistung, die Stufe 112 entspricht Stufe C in Fig. 3 und besitzt etwa 13 % der Gesamtgaserzeugungsleistung, und die Stufe 118 entspricht der Stufe D in Fig. 3 und besitzt etwa 7 % der Gesamtgaserzeugungsleistung des Generators.

Ganz allgemein gesprochen, beim zumindest dreistufigen Gasgenerator sollten wenigstens zwei Stufen unterschiedliche Gaserzeugungsleistungen haben, um die Gasleistung des gesamten Gasgenerators variieren zu können. Darüber hinaus wäre es möglich, Festtreibstoff 40 mit unterschiedlichen Geometrien in einzelnen Brennkammern vorzusehen. Zum Beispiel könnten die Tabletten in einer Stufe größer als die in der anderen Stufe sein, wodurch sich unterschiedliche Füllmengen erreichen lassen. Auch unterschiedliche Treibsatzmischungen für einzelne Kammern wären denkbar.

Um zu verhindern, daß beispielsweise der in Figur 1 gezeigte Gasgenerator um 180° gedreht (das heißt von links nach rechts gedreht) ins Fahrzeug eingebaut und die Zünder dementsprechend falsch angeschlossen werden, kann eine Einbaulagesicherung vorgesehen sein. Diese ist sehr einfach zu realisieren, wenn, im Gegensatz zu der dargestellten Ausführungsform, die Zündereinheiten, quer zur Längserstreckung des Gasgenerators gesehen, unsymmetrisch zum Außengehäuse 10 und/oder unsymmetrisch zueinander angeordnet sind. Beispielsweise könnte die mittlere Zündereinheit 34 aus der Mitte weiter nach rechts verschoben sein, wie anhand der Mittelachse A" angedeutet. Dann ließe sich der Gasgenerator nur in einer Position einbauen, wenn zum Beispiel fahrzeugseitig entsprechende Aufnahmen für die Zündereinheiten 32, 34, 36 vorgesehen sind.

Die Zünderaußengehäuse 32 können als Befestigungsmittel zur Arretierung des gesamten Gasgenerators in einem Gassackmodul oder direkt im Fahrzeug ausgebildet sein und als entsprechendes Befestigungsmittel gestaltet sein. Beispielsweise kann am Zünderaußengehäuse 42 ein Gewinde 100, eine Nut 102 zur Einbringung eines Sicherungsrings 104 oder ein sogenanntes 3K-Profil vorgesehen sein. Ein 3K-Profil ist ein im Querschnitt nicht kreisförmiges Profil, das auf dem Umfang sogenannte Kreiskeilprofile besitzt, also Abschnitte, die in Umfangsrichtung einen stetig größer werdenden Abstand von der Mittelachse haben. Das 3K-Profil ist beispielsweise in der DE 42 09 153 A1 beschrieben.

## Patentansprüche

1. Gasgenerator, mit
einem langgestreckten Außengehäuse (10), das Stirnseiten und eine Seitenwand aufweist,
wenigstens drei unabhängig voneinander aktivierbaren Stufen (12, 14, 16; 112, 114, 116, 118), und
zu jeder Stufe (12, 14, 16; 112, 114, 116, 118) eine zugeordnete Zündereinheit (32, 34, 36; 132, 134, 136, 138),
wobei die Zündereinheiten (32, 34, 36; 132, 134, 136, 138) an die Seitenwand des Außengehäuses (10) angesetzt sind.

2. Gasgenerator nach Anspruch 1, **dadurch gekennzeichnet, daß** die Zündereinheiten (32, 34, 36; 132, 134, 136, 138) radial zum Außengehäuse (10) ausgerichtet sind.

3. Gasgenerator nach Anspruch 1 oder 2, **dadurch gekennzeichnet, daß** die Zündereinheiten (32, 34, 36; 132, 134, 136, 138) identisch aufgebaut sind.

4. Gasgenerator nach einem der Ansprüche 1 bis 3, **dadurch gekennzeichnet, daß** die Zündereinheiten (32, 34, 36; 132, 134, 136, 138) zum Außengehäuse gleich ausgerichtet sind.

5. Gasgenerator nach einem der vorhergehenden Ansprüche, **dadurch gekennzeichnet, daß** jede Zündereinheit (32, 34, 36; 132, 134, 136, 138) rückseitige, elektrische Kontakte (48) hat, die dem Außengehäuse (10) abgewandt sind.

6. Gasgenerator nach einem der vorhergehenden Ansprüche, **dadurch gekennzeichnet, daß** das Außengehäuse (10) für jede Zündereinheit (32, 34, 36; 132, 134, 136, 138) eine Durchlassöffnung (52) und zu jeder Stufe (12, 14, 16; 112, 114, 116, 118) Auslassöffnungen (64) für erzeugtes Gas besitzt, wobei Durchlassöffnung (52) und Auslassöffnungen (64) in diametral gegenüberliegenden Bereichen des Außengehäuses (10) angeordnet sind.

7. Gasgenerator nach einem der vorhergehenden Ansprüche, **dadurch gekennzeichnet, daß** die Stufen (12, 14, 16; 112, 114, 116, 118) durch zugeordnete, mit Festtreibstoff (40) gefüllte Brennkammern (22, 24, 26; 122, 124, 126, 128) gebildet sind.

8. Gasgenerator nach einem der vorhergehenden Ansprüche, **dadurch gekennzeichnet, daß** das Außengehäuse (10) modular aufgebaut ist, indem die zwischen den axial äußeren Stufen liegende Stufe (14) bzw. liegenden Stufen (114, 116) einen durch ein bzw. jeweils ein rohrförmiges Teil gebildeten Außengehäuseabschnitt besitzt bzw. besitzen.

9. Gasgenerator nach Anspruch 8, **dadurch gekennzeichnet, daß** zwischen Außengehäuseabschnitten scheibenförmige, axiale Trennwände (80) vorgesehen sind.

10. Gasgenerator nach Anspruch 9, **dadurch gekennzeichnet, daß** alle axialen Trennwände (80) dieselbe Geometrie und Abmaße besitzen.

11. Gasgenerator nach einem der vorhergehenden Ansprüche, **dadurch gekennzeichnet, daß** er drei Stufen (12, 14, 16) hat, deren Gaserzeugungsleistung etwa 1/7, 2/7 und 4/7 der Gesamtgaserzeugungsleistung des Gasgenerator beträgt.

12. Gasgenerator nach einem der Ansprüche 1 bis 10, **dadurch gekennzeichnet, daß** er vier Stufen (112, 114, 116, 118) hat, deren Gaserzeugungsleistung etwa 7 %, 13 %, 27 % und 53 % der Gesamtgaserzeugungsleistung des Gasgenerators beträgt.

13. Gasgenerator nach einem der vorhergehenden Ansprüche, **dadurch gekennzeichnet, daß** wenigstens zwei Stufen (12, 14, 16; 112, 114, 116, 118) unterschiedliche Gaserzeugungsleistungen, Festtreibstoff (40) unterschiedlicher Geometrie und/oder unterschiedliche Treibsatzmischungen haben.

14. Gasgenerator nach einem der vorhergehenden Ansprüche, **dadurch gekennzeichnet, daß** die Zünderaußengehäuse (42), quer zur Längserstreckung des Gasgenerators gesehen, unsymmetrisch zum Außengehäuse (10) und/oder zueinander unsymmetrisch angeordnet sind.

15. Gasgenerator nach einem der vorhergehenden Ansprüche, **dadurch gekennzeichnet, daß** Zünderaußengehäuse (42) als Befestigungsmittel zur Arretierung des Gasgenerators in einem Modul ausgebildet sind.
